# EUROPEAN PATENT APPLICATION

(11) **EP 1 217 415 A2**
(43) Date of publication of application: **26.06.2002**
(21) Application number: 01129652.2
(22) Date of filing: 12.12.2001
(51) Int. Cl.: G02B 26/12

(54) **Multiple beam raster output scanning system**

(30) Priority: 21.12.2000 US 745926
(71) Applicant: Xerox Corporation, Rochester, New York 14644 (US)
(72) Inventor: Wilson, James M., Glendora, California 91741 (US); Guerin, Jean-Michel, Glendale, California 91201 (US); Wang, Mark Shi, California 92614 (US)
(74) Representative: Grünecker, Kinkeldey, Stockmair & Schwanhäusser Anwaltssozietät

(57) **Abstract**

A multiple beam raster output scanning (ROS) system has a reduced number of optical elements with the sagittal portions of the beams requiring only a spherical diode lens and a wobble correction mirror for each beam. The tangential portions of the beams require only the spherical diode lens and a shared common tangential lens and a shared common two element f-theta scan lens. Fold mirrors are used to provide a compact raster output scanning system.

## Description

### BACKGROUND OF THE INVENTION

The present invention relates to a multiple beam raster output scanning (ROS) system and, more particularly, to a multiple beam raster output scanning (ROS) system with a reduced number of optical elements.

A raster output scanner (or ROS) conventionally has a multi-faceted polygon mirror that is rotated about its central axis while an intensity-modulated beam is directed to the rotating polygon at a predetermined angle. The light beam is reflected by a facet and thereafter focussed to a "spot" on a photosensitive recording medium. The rotation of the polygon causes the spot to scan linearly across the photosensitive medium in a scan direction. The scan direction is sometimes referred to as the fast scan or sagittal direction. Meanwhile, the photosensitive medium is advanced relatively more slowly than the rate of the scan in a slow scan direction which is orthogonal to the scan direction. The slow scan direction is sometimes referred to as the cross-scan or tangential direction. In this way, the beam scans the photosensitive medium in a raster scanning pattern. The image formed on the photosensitive medium by the ROS is then used to create a permanent image by transferring and fusing toner that was electrostatically attracted to the image onto a recording medium, usually plain paper.

A single ROS can be used to print a single color, typically black. A full color printer typically requires four images, one for each of the three primary colors of cyan, magenta, yellow, and an additional one for black. Multiple colors can be imprinted on a recording medium in one pass through the system by using a sequence of four raster optical scanners, one for each system color.

Prior color printers used four separate ROS's to print full color with each ROS comprised of a separate polygon mirror, laser, lens system, and photoreceptor as detailed in U.S. Patent Number 4,847,642 to Murayama et al. Problems with such systems include (1) cost problems, at least partially related to the cost of multiple xerographic stations, each of which has its own ROS, and (2) image quality problems, at least partially related to the difficulty of producing separate images on each photoreceptor and then registering (overlapping) the separate images to produce a color output.

Both cost and image quality problems can be solved by having multiple modulated laser beams share a single common optical system and single common rotating polygon mirror before the beams are separated to multiple photoreceptors. U.S. Patent Number 5,784,094 to Ota et al. teaches multiple laser beams and a single rotating polygon mirror. A reflective two-tier roof prism separates the beams after deflection by the polygon mirror to the multiple photoreceptors. After separation, each beam will pass through distortion correcting means and cylindrical lenses.

While raster output scanner based printing systems are well known, implementing such printing systems that fit into a small space or on a desk is difficult. One reason is the optical cross-sectional area of the raster output scanner. This optical area must remain obstruction free so that the charged photoreceptor can be properly illuminated which limits how small the printing systems can be. Raster output scanner designs which reduce the optical cross-sectional area are exceedingly useful.

A compact design for the scanning optics of these prior art type of ROS systems is desirable to make the machine itself as compact as possible and to enable extension of the same ROS design into many machine architectures.

Current multiple beam scanning systems often require numerous individual optical elements for each beam. Some designs use expensive optical components such as polarizers, dichroic beam splitters and variable wavelength lasers. Other multiple beam scanning systems require the beams to be incident upon the rotating polygon mirror at different angles causing expensive and intricate optical alignment.

One well known technique to reduce the size of a ROS system is to reduce the number of optical elements in the ROS system.

It would be desirable to improve the efficiency, shorten the optical path lengths, and use as few optical elements as possible to decrease hardware, assembly and alignment costs in a ROS system.

It is an object of the present invention to provide a multiple beam raster output scanning (ROS) system with a reduced number of optical elements and with the multiple beams sharing a single common optical element as much as possible.

### SUMMARY OF THE INVENTION

According to the present invention, a multiple beam raster output scanning (ROS) system has a reduced number of optical elements with the sagittal portions of the beams requiring only a spherical diode lens and a wobble correction mirror for each beam. The tangential portions of the beams require only the spherical diode lens and a shared common tangential lens and a shared common two element f-theta scan lens. Fold mirrors are used to provide a compact raster output scanning system.

Other objects and attainments together with a fuller understanding of the invention will become apparent and appreciated by referring to the following description and claims taken in conjunction with the accompanying drawings.

### BRIEF DESCRIPTION OF THE DRAWINGS

Figure 1 illustrates the multiple beam raster output scanning system with a reduced number of optical elements of the present invention.

Figure 2 illustrates a side view in the sagittal plane of a single beam in the multiple beam raster output scanning system of Figure 1 of the present invention.

Figure 3 illustrates a side view in the tangential plane of a single beam in the multiple beam raster output scanning system of Figure 1 of the present invention.

### DESCRIPTION OF THE INVENTION

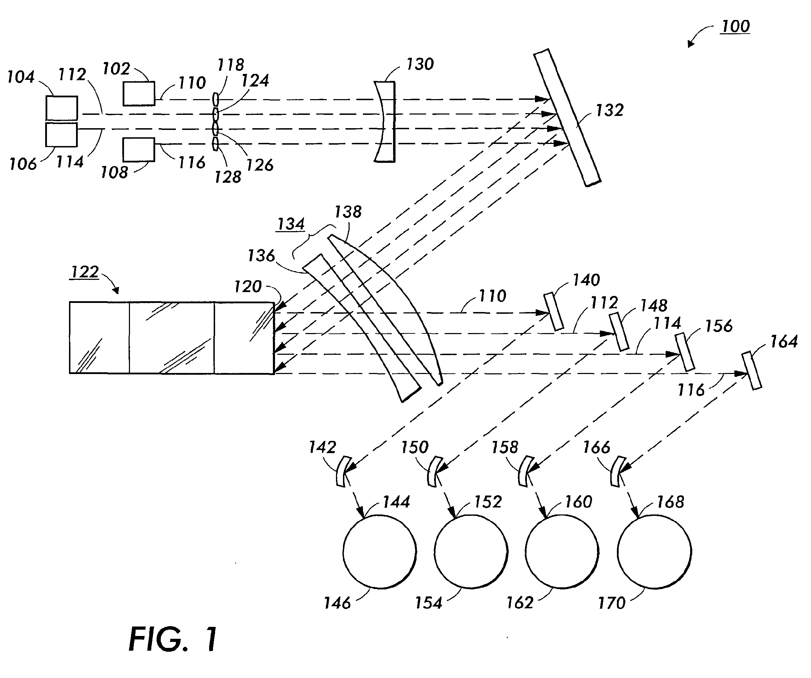

Reference is now made to Figure 1 illustrating a multiple beam raster output scanning system 100 with a reduced number of optical elements of the present invention.

The raster output scanning system 100 has a first light source 102, a second light source 104, a third light source 106 and a fourth light source 108.

The first light source 102, such as a laser diode, emits a first modulated coherent light beam 110. The first light beam 110 is modulated in conformance with the information contained in a video signal sent from an image output control circuit (not shown in the Figure) to the first light source 102.

The second light source 104, such as a laser diode, emits a second modulated coherent light beam 112. The second light beam 112 is modulated in conformance with the information contained in a video signal sent from an image output control circuit (not shown in the Figure) to the second light source 104.

The third light source 106, such as a laser diode, emits a third modulated coherent light beam 114. The third light beam 114 is modulated in conformance with the information contained in a video signal sent from an image output control circuit (not shown in the Figure) to the third light source 106.

The fourth light source 108, such as a laser diode, emits a fourth modulated coherent light beam 116. The fourth light beam 116 is modulated in conformance with the information contained in a video signal sent from an image output control circuit (not shown in the Figure) to the fourth light source 108.

The four light sources 102, 104, 106 and 108 can share the same control circuit or each light source can have different control circuits. The four light beams 110, 112, 114 and 116 can be independently modulated.

The four modulated light beams 110, 112, 114 and 116 are emitted parallel to each other and closely spaced so that the four beams may pass through the same optical elements of the ROS 100.

The first light beam 110, the second light beam 112, the third light beam 114 and the fourth light beam 116 are diverging as emitted from their light sources.

The first light beam 110 is focused by the first spherical diode lens 118. In the sagittal plane, the first spherical diode lens 118 will focus the first light beam 110 to a spot on the facet 120 of the multi-faceted rotating polygon mirror 122. In the tangential plane, the first spherical diode lens 118 will semi-collimate the first light beam 110.

The second light beam 112 is focused by the second spherical diode lens 124. In the sagittal plane, the second spherical diode lens 124 will focus the second light beam 112 to a spot on the facet 120 of the multi-faceted rotating polygon mirror 122. In the tangential plane, the second spherical diode lens 124 will semi-collimate the second light beam 112.

The third light beam 114 is focused by the third spherical diode lens 126. In the sagittal plane, the third spherical diode lens 126 will focus the third light beam 114 to a spot on the facet 120 of the multi-faceted rotating polygon mirror 122. In the tangential plane, the third spherical diode lens 126 will semi-collimate the third light beam 114.

The fourth light beam 116 is focused by the fourth spherical diode lens 128. In the sagittal plane, the fourth spherical diode lens 128 will focus the fourth light beam 116 to a spot on the facet 120 of the multi-faceted rotating polygon mirror 122. In the tangential plane, the fourth spherical diode lens 128 will semi-collimate the first light beam 116.

The first light beam 110, the second light beam 112, the third light beam 114 and the fourth light beam 116 are diverged by a single tangential cylindrical lens 130. The negative concave/plane lens 130 when combined with the respective spherical lens 118, 124, 126 or 128 acts as a beam expander for the respective light beams 110, 112, 114 and 116 in the tangential plane. The tangential cylindrical lens 130 has no optical power in the sagittal plane and does not effect the four light beams 110, 112, 114 and 116 in the sagittal plane.

The first light beam 110, the second light beam 112, the third light beam 114 and the fourth light beam 116 are reflected by a single first fold mirror 132. The fold mirror is flat and has no optical power in either the tangential or sagittal plane. The four light beams 110, 112, 114 and 116 merely change direction by reflecting from the fold mirror 132.

The first light beam 110, the second light beam 112, the third light beam 114 and the fourth light beam 116 are focused by the f-theta scan lenses 134 to form tangential lines on the facet 120 of the multi-faceted rotating polygon mirror 122. The f-theta scan lenses 134 consists of a first cylindrical concave/plano lens 136 and a second cylindrical plano/convex lens 138. The first lens 136 is closest to the polygon mirror 122 so the four light beams 110, 112, 114 and 116 will be incident upon the convex side of the second lens 138 first and then the first lens 136 second, starting with its plano side.

The first light beam 110, the second light beam 112, the third light beam 114 and the fourth light beam 116 are expanding or diverging in the tangential plane due to the respective spherical lens 118, 124, 126 or 128 and the concave/plane negative lens 124. The f-theta scan lens 134 with the second lens 138 and then the first lens 136 collimate the light beams 110, 112, 114 and 116 to form lines on the facet 120.

The tangential f-theta scan lenses 134 have no optical power in the sagittal plane and do not effect the four light beams 110, 112, 114 and 116 in the sagittal plane.

Thus, each beam will form a line at the facet of the polygon mirror. Each beam will be focused to a spot in the sagittal plane on the facet by its respective spherical diode lens. Each beam will be expanded and diverging by its respective spherical diode lens and the common negative lens before being collimated to a line in the tangential plane by the second and first lens of the common f-theta scan lens beams at the facet. Each light beam forms a separate line on the facet.

The four beams 110, 112, 114 and 116 are closely spaced so that the beams can share the common optics of the negative lens 130 and the two element f-theta scan lenses 134.

The polygon mirror 122 of the present invention rotates around an axis of rotation by a conventional motor (not shown), known to those of ordinary skill in the art.

The first light beam 110, the second light beam 112, the third light beam 114 and the fourth light beam 116 are reflected from the facet 120 of the rotating polygon mirror 122. The four beams 110, 112, 114 and 116 are still collimated in the tangential plane and are now diverging in the sagittal plane.

The first light beam 110, the second light beam 112, the third light beam 114 and the fourth light beam 116 are then focused by the f-theta scan lenses 134 in the tangential plane. The f-theta scan lenses 134 consists of a first cylindrical concave/plano lens 136 and a second cylindrical plano/convex lens 138. The first lens 136 is closest to the polygon mirror 122 so the four light beams 110, 112, 114 and 116 will be incident upon the convex side of the first lens 136, then incident upon the plano side of the second lens 138.

The tangential f-theta scan lenses 134 have no optical power in the sagittal plane and do not effect the four light beams 110, 112, 114 and 116 in the sagittal plane.

The beam separation is small enough so that the four light beams can pass through the same single f-theta scan lenses 134.

The first light beam 110, after the f-theta scan lens 134, will be reflected by the second fold mirror 140 to the first wobble correction mirror 142.

The fold mirror is flat and has no optical power in either the tangential or sagittal plane. The first light beam 110 merely changes direction away from the other three beams by reflecting from the fold mirror 140.

The first wobble correction mirror 142 will focus the first light beam 110 in the sagittal plane on the scan line 144 on the first photoreceptor 146. The first wobble correction mirror 142 has no power in the tangential plane and does not effect the first light beam 110 in the tangential plane.

The first light beam 110 will be focused to a spot on the scan line 144 on the first photoreceptor 146. The f-theta scan lens will focus the first light beam 110 in the tangential plane and the wobble correction mirror will focus the first light beam in the sagittal plane. The first light beam spot will scan across the scan line 144 due to reflection from the rotating facet 120 of the polygon mirror 122.

The second light beam 112, after the f-theta scan lens 134, will be reflected by the third fold mirror 148 to the second wobble correction mirror 150.

The fold mirror is flat and has no optical power in either the tangential or sagittal plane. The second light beam 112 merely changes direction away from the other three beams by reflecting from the fold mirror 148.

The second wobble correction mirror 150 will focus the second light beam 112 in the sagittal plane on the scan line 152 on the second photoreceptor 154. The second wobble correction mirror 150 has no power in the tangential plane and does not effect the second light beam 112 in the tangential plane.

The second light beam 112 will be focused to a spot on the scan line 152 on the second photoreceptor 154. The f-theta scan lens will focus the second light beam 112 in the tangential plane and the wobble correction mirror will focus the second light beam in the sagittal plane. The second light beam spot will scan across the scan line 152 due to reflection from the rotating facet 120 of the polygon mirror 122.

The third light beam 114, after the f-theta scan lens 134, will be reflected by the fourth fold mirror 156 to the third wobble correction mirror 158.

The fold mirror is flat and has no optical power in either the tangential or sagittal plane. The third light beam 114 merely changes direction away from the other three beams by reflecting from the fold mirror 156.

The third wobble correction mirror 158 will focus the third light beam 114 in the sagittal plane on the scan line 160 on the third photoreceptor 162. The third wobble correction mirror 158 has no power in the tangential plane and does not effect the third light beam 114 in the tangential plane.

The third light beam 114 will be focused to a spot on the scan line 160 on the third photoreceptor 162. The f-theta scan lens will focus the third light beam 114 in the tangential plane and the wobble correction mirror will focus the third light beam in the sagittal plane. The third light beam spot will scan across the scan line 160 due to reflection from the rotating facet 120 of the polygon mirror 122.

The fourth light beam 116, after the f-theta scan lens 134, will be reflected by the fifth fold mirror 164 to the fourth wobble correction mirror 166.

The fold mirror is flat and has no optical power in either the tangential or sagittal plane. The fourth light beam 116 merely changes direction away from the other three beams by reflecting from the fold mirror 164.

The fourth wobble correction mirror 166 will focus the fourth light beam 116 in the sagittal plane on the scan line 168 on the fourth photoreceptor 170. The fourth wobble correction mirror 166 has no power in the tangential plane and does not effect the fourth light beam 116 in the tangential plane.

The fourth light beam 116 will be focused to a spot on the scan line 168 on the fourth photoreceptor 170. The f-theta scan lens will focus the fourth light beam 116 in the tangential plane and the wobble correction mirror will focus the fourth light beam in the sagittal plane. The fourth light beam spot will scan across the scan line 168 due to reflection from the rotating facet 120 of the polygon mirror 122.

The first fold mirror 132 is not optically necessary for the raster scanning system 100 of the present invention. However, the first fold mirror folds the optical path of the multiple beams and allows the optical components of the raster scanning system to be positioned in a more compact area.

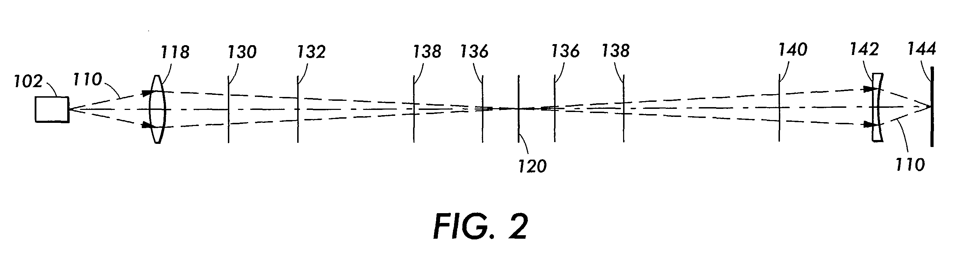

Reference is now made to Figure 2 illustrating a sagittal plane view of a single beam 110 in the multiple beam raster output scanning system 100 of the present invention. Figure 2 is not drawn to scale.

The first light source 102 emits a first light beam 110 which is diverging in the sagittal plane.

The first spherical diode lens 118 will focus the light beam 110 to a spot on the facet 120 of the multi-faceted rotating polygon mirror 122 in the sagittal plane.

The converging light beam 110 is not effected in the sagittal plane by the cylindrical lens 130, the first fold mirror 132, the plano/convex lens 138 and the concave/plano lens 136 of the f-theta scan lenses 134.

The light beam 110 is focused to a spot at the facet 120 of the polygon mirror 122. The light beam will reflect from the facet 120 and is now diverging in the sagittal plane.

The diverging light beam 110 is not effected in the sagittal plane by the concave/plano lens 136 and the plano/convex lens 138 of the f-theta scan lenses 134 and the second fold mirror 140.

The light beam 110 is focused in the sagittal plane by the first wobble correction mirror 142 to a spot on the scan line 144 on the first photoreceptor 146.

Thus, the raster optical scanning system 100 of the present invention requires only two optical elements for the sagittal portion of each scanning beam: a spherical diode lens and a wobble correction mirror. Other prior art raster scanning systems might have 4 or 5 optical elements for the sagittal portion of a single beam. A four beam raster scanner would need 16 to 20 sagittal optical elements while the present invention only needs 4 sagittal elements and 4 spherical diodes lenses. This lack of sagittal elements severely reduces, if not eliminates, the problem of sagittal bow for the multiple beam raster optical scanning system of the present invention.

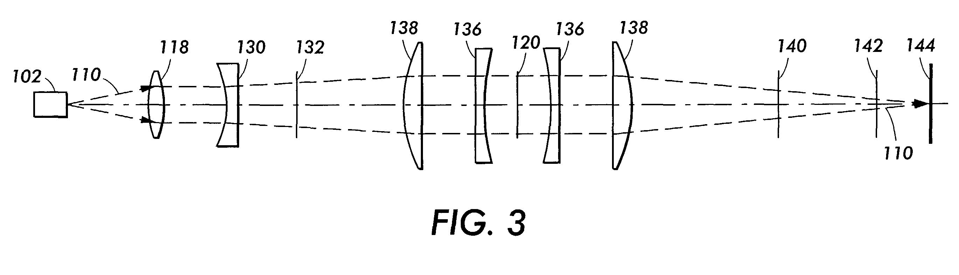

Reference is now made to Figure 3 illustrating a tangential plane view of a single beam 110 in the multiple beam raster output scanning system 100 of the present invention. Figure 3 is not drawn to scale.

The first light source 102 emits a first light beam 110 which is diverging in the tangential plane.

The first spherical diode lens 118 will semi-collimate the light beam 110 in the tangential plane.

The light beam 110 is diverged by the cylindrical lens 130.

The diverging light beam 110 is not effected in the tangential plane by the first fold mirror 132.

The light beam 110 is collimated in the tangential plane by the plano/convex lens 138 and the concave/plano lens 136 of the f-theta scan lenses 134 to form a line on the facet 120 of the multi-faceted rotating polygon mirror 122.

The light beam 110 will reflect from the facet 120 and is still collimated in the tangential plane.

The light beam 110 is focused in the tangential plane by the concave/plano lens 136 and the plano/convex lens 138 of the f-theta scan lenses 134 to form a spot on the scan line 144 on the first photoreceptor 146

The converging light beam 110 is not effected in the tangential plane by the second fold mirror 140 and the first wobble correction mirror 142.

Thus the raster optical scanning system 100 of the present invention requires only four optical elements for the tangential portion of each scanning beam: a spherical diode lens, a tangential lens and the two element f-theta scan lenses. The tangential lens and the two element f-theta scan lenses are single elements that are common to all four beams. The raster scanning system does not require an optical element with just tangential power. And only the spherical diode lens have individualized tangential power for each beam.

The multiple beam raster optical scanning system of the present invention reduces the height of the system by a factor of three. The multiple beam raster optical scanning system parallel stacks four beams and reduces the number of optical elements to four sagittal elements (the wobble correction mirrors), three shared tangential elements (the tangential lens and the two lens of the f-theta scan lens), four spherical diode lens and five flat mirrors.

The total number of mirrors in the optical path of each beam is the same to preserve parity and to prevent differential bow.

The cost of this multiple beam ROS is reduced since the optical elements can be shared by all four beams rather than requiring specialized optical elements for each beam.

As opposed to internal modulation within the light source, the light beam can be modulated by any suitable external acousto-optic or electro-optical modulator. The light beam will be emitted from the light source as an unmodulated coherent beam and then directed to the external modulator which will modulate the beam in conformance with the information contained in the video signal sent from the image output control circuit to the modulator.

## Claims

1. A multiple beam raster output scanning system comprising:
a first light source emitting a first light beam that is modulated in accordance with an input video data signal; a second light source emitting a second light beam that is modulated in accordance with an input video data signal; a third light source emitting a third light beam that is modulated in accordance with an input video data signal; and a fourth light source emitting a fourth light beam that is modulated in accordance with an input video data signal;
a first photoreceptor, a second photoreceptor, a third photoreceptor, and a fourth photoreceptor;
a rotating polygon mirror having a plurality of facets, one of said plurality of facets scanning said first light beam from said first light source across said first photoreceptor, said one of said plurality of facets scanning said second light beam from said second light source across said second photoreceptor, said one of said plurality of facets scanning said third light beam from said third light source across said third photoreceptor, said one of said plurality of facets scanning said fourth light beam from said fourth light source across said fourth photoreceptor;
a first optical system located between said light sources and said polygon mirror including:
a first spherical diode lens for focusing in the sagittal plane said first light beam from said first light source onto said one of said plurality of facets; a second spherical diode lens for focusing in the sagittal plane said second light beam from said second light source onto said one of said plurality of facets; a third spherical diode lens for focusing in the sagittal plane said third light beam from said third light source onto said one of said plurality of facets; a fourth spherical diode lens for focusing in the sagittal plane said fourth light beam from said fourth light source onto said one of said plurality of facets; and
said first spherical diode lens, a tangential cylindrical lens and a f-theta scan lens of a first cylindrical lens and a second cylindrical lens for collimating in the tangential plane said first light beam from said first light source onto said one of said plurality of facets; said second spherical diode lens, said tangential cylindrical lens and said f-theta scan lens for collimating in the tangential plane said second light beam from said second light source onto said one of said plurality of facets; said third spherical diode lens, said tangential cylindrical lens and said f-theta scan lens for collimating in the tangential plane said third light beam from said third light source onto said one of said plurality of facets; said fourth spherical diode lens, said tangential cylindrical lens and said f-theta scan lens for collimating in the tangential plane said fourth light beam from said fourth light source onto said one of said plurality of facets;
a second optical system located between said polygon mirror and said photoreceptors including:
a first wobble correction mirror for focusing said first light beam in the sagittal plane from said one of said plurality of facets onto said first photoreceptor; a second wobble correction mirror for focusing said second light beam in the sagittal plane from said one of said plurality of facets onto said second photoreceptor; a third wobble correction mirror for focusing said third light beam in the sagittal plane from said one of said plurality of facets onto said third photoreceptor; a fourth wobble correction mirror for focusing said fourth light beam in the sagittal plane from said one of said plurality of facets onto said fourth photoreceptor; and
said f-theta scan lens for focusing said first light beam in the tangential plane from said one of said plurality of facets onto said first photoreceptor, said f-theta scan lens for focusing said second light beam in the tangential plane from said one of said plurality of facets onto said second photoreceptor, said f-theta scan lens for focusing said third light beam in the tangential plane from said one of said plurality of facets onto said third photoreceptor, and said f-theta scan lens for focusing said fourth light beam in the tangential plane from said one of said plurality of facets onto said fourth photoreceptor.

2. The multiple beam raster output scanning system of claim 1 wherein said first optical system located between said light sources and said polygon mirror is a folded system and further comprises a first fold mirror for reflecting said first light beam, said second light beam, said third light beam and said fourth light beam between said tangential cylindrical lens and said f-theta scan lens.

3. The multiple beam raster output scanning system of claim 1 wherein said second optical system located between said polygon mirror and said photoreceptors is a folded system and further comprises a second fold mirror for reflecting said first light beam from said f-theta scan lens to said first wobble correction mirror, a third fold mirror for reflecting said second light beam from said f-theta scan lens to said second wobble correction mirror, a fourth fold mirror for reflecting said third light beam from said f-theta scan lens to said third wobble correction mirror, and a fifth fold mirror for reflecting said fourth light beam from said f-theta scan lens to said fourth wobble correction mirror.

4. The multiple beam raster output scanning system of claim 3 wherein said first optical system located between said light sources and said polygon mirror is a folded system and further comprises a first fold mirror for reflecting said first light beam, said second light beam, said third light beam and said fourth light beam between said tangential cylindrical lens and said f-theta scan lens.

5. A multiple beam raster output scanning system comprising:
multiple light sources emitting multiple light beams that are modulated in accordance with multiple input video data signal;
multiple photoreceptors;
a rotating polygon mirror having a plurality of facets, one of said plurality of facets scanning said multiple light beams from said multiple light sources across said multiple photoreceptors;
a first optical system located between said multiple light sources and said polygon mirror including:
multiple spherical diode lenses for focusing in the sagittal plane said multiple light beams from said multiple light sources onto said one of said plurality of facets;
said multiple spherical diode lenses, a tangential cylindrical lens and a f-theta scan lens of a first cylindrical lens and a second cylindrical lens for collimating in the tangential plane said multiple light beams from said multiple light sources onto said one of said plurality of facets;
a second optical system located between said polygon mirror and said multiple photoreceptors including:
multiple wobble correction mirrors for focusing said multiple light beams in the sagittal plane from said one of said plurality of facets onto said multiple photoreceptors; and
said f-theta scan lens for focusing said multiple light beams in the tangential plane from said one of said plurality of facets onto said multiple photoreceptors.
